(19) Europäisches Patentamt

European Patent Office

Office européen des brevets

(11) Veröffentlichungsnummer: **0 478 896 A1**

# (12) EUROPÄISCHE PATENTANMELDUNG

(21) Anmeldenummer: **91110129.3**

(22) Anmeldetag: **20.06.91**

(51) Int. Cl.⁵: **G01K 7/12**

(30) Priorität: **29.09.90 DE 4030926**

(43) Veröffentlichungstag der Anmeldung:
**08.04.92 Patentblatt 92/15**

(84) Benannte Vertragsstaaten:
**AT DE FR GB IT NL SE**

(71) Anmelder: **Heraeus Sensor GmbH**
**Heraeusstrasse 12-14**
**W-6450 Hanau am Main(DE)**

(72) Erfinder: **Hauptmann, Veit**
**Hugo-Wenningerstrasse 1 a**
**W-6450 Hanau 9(DE)**
Erfinder: **Weller, Hans**
**St. Brunostrasse 14**
**W-8752 Kleinostheim(DE)**
Erfinder: **Wassmuth, Klaus, Dr.**
**Rosenstrasse 18**
**W-8755 Alzenau(DE)**
Erfinder: **Wienand, Karlheinz, Dr.**
**Mudweg 4**
**W-8750 Aschaffenburg(DE)**
Erfinder: **Hock, Werner**
**Rappach 19**
**W-8752 Mömbris(DE)**

(74) Vertreter: **Grimm, Ekkehard**
**Zentralbereich Patente u. Lizenzen,**
**Heraeusstrasse 12-14**
**W-6450 Hanau/Main(DE)**

(54) Verfahren und Schaltungsanordnung zur Messung der Temperatur einer Messstelle mittels eines Thermoelements.

(57) Es sind Verfahren und Schaltungsanordnungen bekannt zur Messung der Temperatur einer Meßstelle mittels eines Thermoelementes mit mindestens zwei in einem Punkt thermisch vereinigten Thermoschenkeln, deren Anschlüsse sich auf einer von der Meßstelle unterschiedlichen Vergleichsstellentemperatur befinden, wobei die zwischen den Anschlüssen anliegende Thermospannung in digitale elektrische Signale umgewandelt und einem Rechner zugeführt wird, in dem die zugeführte Thermospannung des Thermoelementes unter Berücksichtigung der Vergleichsstellentemperatur korrigiert und danach einer Anzeige und/oder Meßwertausgabe zugeführt wird. Um ein Verfahren und eine Schaltungsordnung bereitzustellen, welche mit möglichst geringem apperativem Aufwand einen genauen Wert für die mit dem Thermoelement zu messende Temperatur liefern, ist die Vergleichsstelle des Thermoelementes thermisch gekoppelt mit einem die Temperatur der Anschlüsse an der Vergleichsstelle des Thermoelementes erfassenden temperatursensitiven piezoelektrischen Schwingelement, das die Frequenz eines Oszillators bestimmt und mit dem Rechner verbunden ist, dem ein dieser Temperatur entsprechendes digitales elektrisches Signal zugeführt wird.

EP 0 478 896 A1

Die Erfindung betrifft ein Verfahren zur Messung der Temperatur einer Meßstelle unter Verwendung eines Thermoelementes mit mindestens zwei in einem Punkt thermisch vereinigten Thermoschenkeln, deren Anschlüsse sich auf einer von der Temperatur der Meßstelle verschiedenen Vergleichsstellentemperatur befinden, wobei die an den Anschlüssen anliegende Thermospannung in digitale elektrische Signale umgewandelt und einem Rechner zugeführt wird, in dem die Thermospannung unter Berücksichtigung der Vergleichsstellentemperatur korrigiert wird sowie eine Schaltungsanordnung zur Durchführung des Verfahrens.

Aus den nachfolgend genannten Veröffentlichungen ist es bekannt, daß zur genauen Ermittlung der Temperatur einer Meßstelle aus der Thermospannung eines Thermoelementes die thermoelektrischen Verhältnisse an der Vergleichsstelle konstant gehalten werden müssen. Aus der DE-OS 19 40 009 ist es bekannt, eine Temperaturregelschaltung an der Vergleichsstelle mittels eines Halbleitersubstrates aufzubauen. Aus dem AEG-Hilfsbuch 8. Auflage, Essen, 1961, Seite 8/38 ist eine weitere Art eines Thermostaten mit Hilfe eines Bimetallreglers bekannt. In beiden Fällen wird eine Konstanthaltung der Temperatur der Vergleichsstelle erzielt, wobei die Konstanz aufgrund des Regelverhaltens dieser Regler mehr oder weniger großen Schwankungen unterworfen ist.

Aus den US-PS 532,475 und 1,040,060 ist es weiterhin bekannt, eine Kompensation von Temperaturschwankungen der Vergleichsstelle vorzunehmen. Dazu werden temperaturabhängige Widerstände an der Vergleichsstelle eingesetzt, die so dimensioniert sind, daß bei Temperaturänderungen an der Vergleichsstelle die Spannungsänderung am elektrischen Widerstand mit umgekehrten Vorzeichen der Veränderung der Thermospannung am Thermoelement entspricht. Aus der deutschen Gebrauchsmusterschrift 87 00 387 ist es ebenfalls bekannt, eine Vergleichsstellenkompensation mittels Widerständen vorzunehmen. Hier wird die Verwendung verschiedener Widerstandsmaterialien wie zum Beispiel Platin, Nickel, Kupfer oder Iridium vorgeschlagen.

Diese Methoden der Vergleichsstellenkompensation liefern nur bedingt genaue Temperaturen der Meßstelle, die von der Genauigkeit des elektrischen Widerstandes und der Widerstandsänderung in Abhängigkeit von der Temperatur abhängen.

Aus der US-PS 4,936,690 ist eine weitere Methode der Kompensation von Temperaturschwankungen an der Vergleichsstelle bekannt. Hier wird mittels eines zweiten Thermoelements die Temperatur der Vergleichsstelle des ersten Thermoelements gemessen. Die Thermospannungen der beiden Thermoelemente werden über einen gemeinsamen A/D-Wandler einem Rechner zugeführt, in dem die Thermospannung des ersten Thermoelementes unter Berücksichtigung der Vergleichsstellentemperatur korrigiert und danach einer Anzeige und/oder Meßwertausgabe zugeführt wird. Dabei entstehen weitere Thermospannungen, die durch Einsatz weiterer technischer Mittel kompensiert werden müssen.

Aufgabe der vorliegenden Erfindung ist es deshalb, ein Verfahren bereitzustellen, welches mit möglichst geringem apperativen Aufwand einen genauen Wert für die mit dem Thermoelement zu messende Temperatur liefert. Aufgabe der Erfindung ist es weiterhin, die technischen Mittel zur Realisierung des Verfahrens bereitzustellen.

Die Aufgabe wird für das eingangs charakterisierte Verfahren und die Schaltungsordnung erfindungsgemäß durch die kennzeichnenden Merkmale der Ansprüche 1 und 5 gelöst.

Zweckmäßigerweise kann als temperatursensitives piezoelektrisches Schwingelement mit elektrostriktiver Wirkung ein Schwingquarz verwendet werden, wie er beispielsweise aus der DE-PS 36 33 939 bekannt ist. Für die Verarbeitung im Rechner erweist es sich als vorteilhaft, die vom Oszillator abgegebenen Signale zunächst einem Frequenzteiler zuzuführen, bevor sie dem Rechenwerk des Rechners zugeführt werden. Der Frequenzteiler kann mit dem Rechner verbunden oder in ihm enthalten sein. Es erweist sich weiterhin als nützlich, die vom Thermoelement abgenommene Thermospannung nicht direkt auf dem A/D-Wandler zu leiten, sondern zuerst einem Meßverstärker zuzuführen.

Die Erfindung hat den Vorteil, daß aufgrund der galvanischen Trennung der Vergleichsstellentemperaturerfassung von der Meßstellentemperaturerfassung keine zusätzlichen Thermospannungen auftreten, die zu Meßfehlern führen können. Aufgrund der funktionalen Trennung der beiden Meßdatenerfassungskanäle läßt sich sowohl die Linearisierung der Meßelemente rechnerisch sehr genau ermitteln, als auch die Erfassung der Meßdaten sehr exakt durchführen.

Deshalb ist eine sehr genaue Messung von Temperaturen möglich. Es ist möglich, Meßstellentemperaturen je nach Thermoelement-Typ im Bereich von -270°C bis 1800°C zu messen und dabei Vergleichsstellentemperaturen von -40°C bis 125°C zu berücksichtigen. Die erreichbaren Meß-Genauigkeiten an der Vergleichsstelle im gesamten Vergleichstellen-Temperaturbereich lassen sich mit besser als 0,5°C angeben. Diese Genauigkeiten sind aufgrund der Alterungsbeständigkeit des Quarzes sowie einer hohen Reproduzierbarkeit seiner $f = f(T)$- Kennlinie zu erreichen.

Weiterhin erweist es sich als vorteilhaft, daß die Meßgenauigkeit weitestgehend unabhängig ist von der Temperatur der Meßstelle und der Vergleichsstelle.

Die Hardware zur Vergleichsstellenmessung kann auf ein Minimum beschränkt sein, da sich der Oszillator z.B. aus einfachen Bauelementen wie zwei Widerständen und zwei Kondensatoren als NAND-Gatter (Pierce-Oszillator) zusammensetzen kann.

Ein konkretes Ausführungsbeispiel wird im folgenden anhand der schematischen, im Blockschaltbild dargestellten Figur näher erläutert.

Die von einem an der Meßstelle 1 angebrachten Pt-Pt/Rh-Thermoelement 2 an der Vergleichsstelle 3 erzeugte Thermospannung wird einem Meßwertverstärker 4 zugeführt. Die dort verstärkte Thermospannung wird in einem A/D-Wandler 5 von einem analogen in ein digitales Signal umgewandelt und einem Rechner 6 zugeführt.

Aus diesem Wert läßt sich noch nicht die Temperatur an der Meßstelle 1 exakt bestimmen, da die Vergleichsstelle 3 des Thermoelementes 2 eine bis jetzt nicht bekannte Temperatur hat. Deshalb wird an der Vergleichsstelle 3 ein Schwingquarz 7 so angeordnet, daß er die gleiche Temperatur wie die Vergleichsstelle 3 selbst aufweist. Dieser Schwingquarz 7, dessen Frequenz von der Temperatur der Vergleichsstelle 3 abhängt, bestimmt seinerseits die Frequenz eines Oszillators 8. Die von dem Oszillator 8 abgegebene und von der Temperatur an der Vergleichsstelle 3 bestimmte Frequenz wird einem Frequenzteiler 9 und von dort dem Rechenwerk des Rechners 6 zugeführt. Der Frequenzteiler 9 ist Bestandteil des Rechners 6. Der Rechner 6 kann nun unter Berücksichtigung der Temperatur an der Vergleichsstelle 3 die dort gemessene Thermospannung korrigieren und an der Anzeige 10 die korrekte Meßstellentemperatur ausweisen.

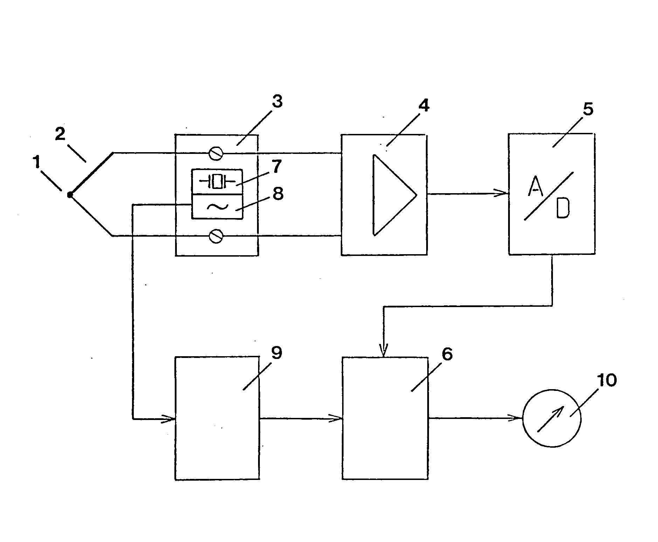

**Patentansprüche**

1. Verfahren zur Messung der Temperatur einer Meßstelle mittels eines Thermoelementes mit mindestens zwei in einem Punkt thermisch vereinigten Thermoschenkeln, deren Anschlüsse sich auf einer von der Meßstelle unterschiedlichen Vergleichsstellentemperatur befinden, wobei die zwischen den Anschlüssen anliegende Thermospannung in digitale elektrische Signale umgewandelt und einem Rechner zugeführt wird, in dem die zugeführte Thermospannung des Thermoelementes unter Berücksichtigung der Vergleichsstellentemperatur korrigiert und danach einer Anzeige und/oder Meßwertausgabe zugeführt wird, dadurch gekennzeichnet, daß mittels eines temperatursensitiven piezoelektrischen Schwingelementes, das die Frequenz eines Oszillators (8) bestimmt, die Vergleichsstellentemperatur gemessen und ein dieser Temperatur entsprechendes digitales elektrisches Signal dem Rechner (6) zugeführt wird.

2. Verfahren nach Anspruch 1, dadurch gekennzeichnet, daß als frequenzbestimmendes temperatursensitives piezoelektrisches Element ein Schwingquarz (7) verwendet wird.

3. Verfahren nach Anspruch 1 und/oder 2, dadurch gekennzeichnet, daß die vom Oszillator (8) abgegebenen Signale zunächst einem Frequenzteiler zugeführt und anschließend in das Rechenwerk des Rechners (6) eingespeist werden.

4. Verfahren nach einem oder mehreren der Ansprüche 1 bis 3, dadurch gekennzeichnet, daß die vom Thermoelement (2) abgenommene Thermospannung erst nach ihrer Verstärkung in ein digitales Signal umgewandelt wird.

5. Schaltungsanordnung zur Messung der Temperatur einer Meßstelle mittels eines Thermoelementes mit mindestens zwei thermisch vereinigten Thermoschenkeln, deren Anschlüsse über einen A/D-Wandler mit dem Rechenwerk eines Rechners, welchem eine Anzeige und/oder eine Meßwertausgabe nachgeschaltet ist, verbunden sind, dadurch gekennzeichnet, daß ein die Temperatur der Anschlüsse an der Vergleichsstelle (3) des Thermoelementes (2) erfassendes temperatursensitives piezoelektrisches Schwingelement, das die Frequenz eines Oszillators (8) bestimmt, mit dem Rechner (6) verbunden ist.

6. Schaltungsanordnung nach Anspruch 5, dadurch gekennzeichnet, daß das temperatursensitive piezoelektrische Schwingelement ein Schwingquarz (7) ist.

7. Schaltungsanordnung nach Anspruch 5 und/oder 6, dadurch gekennzeichnet, daß zwischen den Oszillator (8) und das Rechenwerk des Rechners (6) ein Frequenzteiler (9) geschaltet ist.

8. Schaltungsanordnung nach einem oder mehreren der Ansprüche 5 bis 7, dadurch gekennzeichnet, daß die Anschlüsse der Thermoschenkel über einen Meßverstärker (4) an den A/D-Wandler (5) mit nachfolgendem Rechner (6) geschaltet sind.

## EUROPÄISCHER RECHERCHENBERICHT

Nummer der Anmeldung

**EP 91 11 0129**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 633 939 (HERAEUS) | 1,5 | G 01 K 7/12 |
| A | (* das ganze Dokument *) | 2,3 | |
| | – – – | | |
| Y | EP-A-0 155 878 (COMPAGNIE D'INFORMATIQUE MILI-TAIRE SPATIALE ET AERONAUTIQUE) | 1,5 | |
| A | (* Zusammenfassung *) | 4 | |
| | – – – – – | | |

**RECHERCHIERTE SACHGEBIETE (Int. Cl.5)**

G 01 K

**Der vorliegende Recherchenbericht wurde für alle Patentansprüche erstellt**

| Recherchenort | Abschlußdatum der Recherche | Prüfer |
|---|---|---|
| Den Haag | 21 Januar 92 | RAMBOER P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------------
& : Mitglied der gleichen Patentfamilie, übereinstimmendes Dokument